# EUROPÄISCHE PATENTSCHRIFT

(11) **EP 4 282 250 B1**
(45) Veröffentlichungstag und Bekanntmachung des Hinweises auf die Patenterteilung: **28.01.2026**
(21) Anmeldenummer: 23174858.3
(22) Anmeldetag: 23.05.2023
(51) Int. Cl.: A01F 15/07, A01F 15/08, A01F 15/10

(54) **RUNDBALLENPRESSE**
ROUND BALER
PRESSE À BALLES RONDES

(30) Priorität: 23.05.2022 DE 102022112958
(43) Veröffentlichungstag der Anmeldung: 29.11.2023
(73) Patentinhaber: Maschinenfabrik Bernard Krone GmbH & Co. KG, 48480 Spelle (DE)
(72) Erfinder: Horstmann, Josef, 49479 Ibbenbüren (DE)

(56) Entgegenhaltungen:
- EP-A1- 2 220 929
- EP-A1- 2 556 742
- EP-B1- 2 196 082
- EP-B1- 3 192 349
- EP-B1- 3 203 830
- CA-A1- 3 162 753
- CN-A- 103 929 942

## Beschreibung

Die vorliegende Erfindung betrifft eine Rundballenpresse nach dem Oberbegriff von Anspruch 1.

Rundballenpressen werden in der Landwirtschaft eingesetzt, um Erntegut wie z.B. Heu oder Stroh aufzunehmen und zu Ballen zu verpressen. Das Erntegut wird (z.B. durch eine Pick-up) vom Boden aufgenommen, weitergefördert, normalerweise zerkleinert (z.B. mittels eines Schneidrotors) und schließlich in einer Presskammer zu runden Erntegutballen verpresst. Dort wirken Presselemente auf das Erntegut ein, die auch als Förderelemente wirken und eine umlaufende Bewegung des Ernteguts erzeugen. Der fertige Ballen wird in einem Bindevorgang mit einem Bindematerial umwickelt. Als Bindematerial können Schnüre, Netze oder (z.B. im Falle von Gras) Folien verwendet werden, wobei letztere auch außerhalb der Rundballenpresse in einem hiervon separaten Ballenwickelgerät appliziert werden können. Nach dem Binden innerhalb der Presskammer wird der Ballen ausgeworfen. Erst danach kann die Presskammer wieder zur Bildung eines neuen Ballens genutzt werden. Es entsteht somit ein erheblicher Zeitraum, innerhalb dessen kein Erntegut verarbeitet werden kann. Dies bedeutet normalerweise, dass die Erntegutaufnahme so lange unterbrochen werden muss. D.h. die Rundballenpresse muss für den Binde- und Auswurfvorgang anhalten, welcher typischerweise ca. ein Drittel der gesamten Einsatzzeit beansprucht, was die Produktivität wesentlich beeinträchtigt.

Es ist daher im Stand der Technik bereit vorgeschlagen worden, einen Zwischenspeicher für Erntegut vorzusehen, der gefüllt wird, wenn kein Erntegut verarbeitet werden kann, und beim nächsten Ballenbildungsvorgang wieder geleert wird. Die vorgeschlagenen Lösungen wurden allerdings entweder nicht zur Serienreife geführt oder haben sich nicht durchsetzen können. Z.T. sind die zugrundeliegenden Mechanismen zu komplex.

Die Druckschrift EP 2 196 082 B1 offenbart eine kontinuierlich arbeitende Rundballenpresse, welche einen Speicherraum aufweist, der nach unten durch einen Bodenförderer begrenzt ist. Der Bodenförderer weist mehrere als Förderbänder ausgebildete Förderelemente auf, die bei ungleichmäßiger Befüllung des Pressraumes über dessen Breite mit unterschiedlichen Geschwindigkeiten antreibbar sind.

Aufgabe der Erfindung ist es, verbesserte Mittel bereitzustellen, die einer Rundballenpresse eine kontinuierliche Erntegutaufnahme ermöglichen.

Die Aufgabe wird gelöst mit einer Rundballenpresse mit den Merkmalen des unabhängigen Patentanspruchs 1. Vorteilhafte Ausführungsformen sind den abhängigen Ansprüchen entnehmbar.

Dafür wird eine Rundballenpresse geschaffen, aufweisend einen zu einer Presskammer führenden Zuführkanal, eine Übergabevorrichtung mit einem Übergaberotor, der um eine Übergabeachse in einer Kammerzuführrichtung antreibbar ist, um in einem Pressmodus Erntegut durch den Zuführkanal in Richtung der Presskammer zu fördern, sowie eine Speichervorrichtung mit einem Speicherraum zur zeitweisen Aufnahme von Erntegut, welcher über wenigstens eine Speicheröffnung mit dem Zuführkanal in Verbindung steht.

Die Rundballenpresse ist zum Pressen von landwirtschaftlichem Erntegut zu Rundballen ausgebildet, wobei der eigentliche Pressvorgang in einer Presskammer erfolgt. Bei dem landwirtschaftlichen Erntegut kann es sich insbesondere um Halmgut wie Gras, Stroh oder Heu handeln. Der Begriff "Rundballenpresse" schließt hierbei ausdrücklich auch Maschinen ein, die zusätzlich zu einem Pressen des Ernteguts zu Ballen auch ein Binden und/oder Verpacken der Ballen durchführen. Das Erntegut kann mit einer Aufnahmevorrichtung, insbesondere einer Pick-up, aufgenommen und durch den Zuführkanal werden in Richtung der Presskammer gefördert werden. Zum Fördern kann die Rundballenpresse wenigstens eine Fördervorrichtung aufweisen, z.B. einen Förderrotor oder einen Schneidrotor, der das Erntegut nicht nur weiterfördert, sondern auch schneidet. In jedem Fall durchläuft der Erntegutstrom den Zuführkanal, bevor er zur Presskammer gelangt. Der Zuführkanal ist zur Führung des Ernteguts ausgebildet, wobei er nicht notwendigerweise vollständig geschlossen ausgebildet sein muss.

Die Ausbildung der Presskammer ist im Rahmen der Erfindung nicht festgelegt. So kann es sich um eine Presskammer mit fester oder variabler Größe handeln. Im ersteren Fall kann die Rundballenpresse eine Mehrzahl von Presswalzen aufweisen, die um bezüglich eines Rahmens stationäre Drehachsen drehbar sind. Im letzteren Fall ist die Presskammer wenigstens teilweise durch ein endloses, umlaufend antreibbares Presselement definiert, wobei es sich um ein oder mehrere endlose Pressriemen oder -gurte handeln kann oder z.B. einen Kettenstabförderer.

Die Rundballenpresse weist eine Übergabevorrichtung mit einem Übergaberotor auf, wobei diese Bezeichnung nicht einschränkend auszulegen ist. Der Übergaberotor ist um eine Übergabeachse antreibbar, wobei er zumindest zeitweise im Pressmodus angetrieben ist. Die entsprechende Drehrichtung des Übergaberotors wird hier als "Kammerzuführrichtung" bezeichnet. Die Antriebskraft kann z.B. mechanisch, elektrisch, hydraulisch, elektrohydraulisch oder in anderer Weise erzeugt werden. Die Übergabeachse vorläuft in aller Regel parallel zur Querachse bzw. Y-Achse der Rundballenpresse. Allgemein dient die Übergabevorrichtung zumindest im Pressmodus dazu, Erntegut an die Presskammer zu übergeben, indem sie dieses mittels des Übergaberotors durch den Zuführkanal in Richtung der Presskammer fördert. Insofern kann die Übergabevorrichtung auch als eine Fördervorrichtung angesehen werden. Der Pressmodus kann auch als Ballenbildungsmodus bezeichnet werden und kennzeichnet denjenigen Arbeitsmodus der Rundballenpresse, in welchem Erntegut der Presskammer sukzessive zugeführt wird, wobei ein Erntegutballen geformt und gepresst wird.

Außerdem weist die Rundballenpresse eine Speichervorrichtung auf, mit einem Speicherraum zur Zwischenspeicherung von Erntegut, welcher über wenigstens eine Speicheröffnung mit dem Zuführkanal in Verbindung steht. Der Speicherraum dient also dazu, Erntegut zwischenzeitlich aufzunehmen. Wie nachfolgend noch erläutert wird, ist dies insbesondere für die Zeit vorgesehen, wenn ein Erntegutballen fertiggestellt wurde. Bevor mit der Bildung des nächsten Ballens begonnen werden kann, muss der fertiggestellte Ballen gebunden und ausgeworfen werden. Statt die Erntegutaufnahme in dieser Zeit zu unterbrechen, kann Erntegut im Speicherraum der Speichervorrichtung zwischengespeichert und für die nächste Ballenbildung wieder abgegeben und der Presskammer zugeführt werden. Der Speicherraum steht über wenigstens eine Speicheröffnung mit dem Zuführkanal in Verbindung. Die Verbindung zum Zuführkanal muss nicht unmittelbar gegeben sein, d.h. der Zuführkanal muss sich nicht unmittelbar jenseits der Speicheröffnung an den Speicherraum anschließen, sondern es könnte auch ein Verbindungskanal zwischengeordnet sein. In jedem Fall ist durch die wenigstens eine Speicheröffnung ein Austausch von Erntegut zwischen dem Zuführkanal und dem Speicherraum möglich. Die jeweilige Speicheröffnung kann verschließbar ausgebildet sein, bevorzugt ist sie allerdings dauerhaft geöffnet. Bevorzugt ist genau eine Speicheröffnung vorgesehen.

Die Speichervorrichtung und die Übergabevorrichtung können als Teile einer Speicheranordnung der Rundballenpresse angesehen werden.

Die Speichervorrichtung weist eine Speicherwandung auf, die den Speicherraum nach außen begrenzt, sowie einen antreibbaren Speicherförderer. Erfindungsgemäß ist der Speicherförderer zum umlaufenden Fördern von Erntegut innerhalb des Speicherraums vorgesehen.

Die Speicherwandung ist bevorzugt starr ausgebildet und positionsfest mit einem Rahmen der Rundballenpresse verbunden. Hier und im Folgenden ist mit "Rahmen" derjenige Teil der Rundballenpresse bezeichnet, der gewissermaßen ihre Grundstruktur bildet und ihr insgesamt Stabilität verleiht. Am Rahmen sind über eine geeignete Aufhängung auch die Laufräder der Rundballenpresse angebunden, ebenso wie - im Falle einer gezogenen Ausgestaltung - eine Deichsel. Außerdem weist der Rahmen typischerweise ein Gehäuse auf, das die innenliegenden Teile nach außen abschirmt. Die Speicherwandung ist typischerweise aus Metall, z.B. Stahlblech, ausgebildet. Sie begrenzt den Speicherraum nach außen und definiert somit dessen äußere Dimensionen, was allerdings nicht bedeutet, dass sie ihn vollständig, insbesondere lückenlos, umgibt. Sie sorgt dafür, dass Erntegut nicht unkontrolliert aus dem Speicherraum entweichen kann, wobei allerdings ein teilweises Entweichen je nach Ausgestaltung akzeptabel sein kann.

Des Weiteren weist die Speichervorrichtung den antreibbaren Speicherförderer auf, der zum umlaufenden Fördern von Erntegut innerhalb des Speicherraums ausgebildet ist. Der Speicherförderer kann z.B. mechanisch, elektrisch, hydraulisch, elektrohydraulisch oder in anderer Weise antreibbar sein. Er ist dazu ausgebildet, das Erntegut umlaufend zu fördern, also nach Art eines Umlaufförderers oder Kreisförderers. Im Großen und Ganzen wird das Erntegut also auf einer ringartig geschlossenen Bahn durch den Speicherraum gefördert, wenngleich die exakte Bewegungsbahn einzelner Stücke des Ernteguts u.U. nicht geschlossen ist. Da der Speicherförderer das Erntegut innerhalb des Speicherraums fördert, ist er selbst wenigstens teilweise im Speicherraum angeordnet.

Der Übergaberotor ist dazu eingerichtet, im Pressmodus von der Speichervorrichtung abgegebenes Erntegut durch den Zuführkanal in Richtung der Presskammer zu fördern.

Erfindungsgemäß ist der Übergaberotor zudem dazu eingerichtet, in einem Speichermodus unter Drehung in einer der Kammerzuführrichtung entgegengesetzten Speicherzuführrichtung Erntegut aus dem Zuführkanal zur Zwischenspeicherung in Richtung des Speicherraums zu führen. D.h. dem Übergaberotor (bzw. der Übergabevorrichtung) kommt gewissermaßen eine dreifache Funktion zu. Zum einen dient er im Pressmodus dazu, den normalen Erntegutfluss (von der Aufnahmevorrichtung) durch den Zuführkanal zur Presskammer zu unterstützen, d.h. insbesondere aufrechtzuerhalten. Des Weiteren führt er im Speichermodus (aktiv und/oder passiv) Erntegut in Richtung des Speicherraums, was die Möglichkeit einschließt, dass er es bis in den Speicherraum hineinführt. Man kann sagen, dass er einen von der Aufnahmevorrichtung kommenden Aufnahme-Erntegutstrom gegenüber dem Pressmodus wenigstens teilweise, normalerweise vollständig, umlenkt oder umleitet. Er ist dabei in beiden Modi im oder am Erntegutstrom angeordnet. Die dritte Funktion besteht darin, das Entleeren des Speicherraums zumindest zu unterstützen, indem der Übergaberotor Erntegut aus dem Speicherraum übernimmt und durch den Zuführkanal zur Presskammer hin fördert. Dabei können sich während des Pressmodus wenigstens zeitweise der von der Aufnahmevorrichtung kommende Aufnahme-Erntegutstrom und ein aus dem Speicherraum kommender Speicher-Erntegutstrom zu einem Gesamt-Erntegutstrom vereinigen, welcher der Presskammer zugeführt wird. Der Übergaberotor kann seine Funktion im Pressmodus einerseits sowie im Speichermodus andererseits dadurch ausführen, dass eine Drehrichtungsumkehr erfolgt, d.h. der Übergaberotor dreht im Speichermodus in Gegenrichtung zur Kammerzuführrichtung, was in diesem Zusammenhang als "Speicherzuführrichtung" bezeichnet wird.

Die Speichervorrichtung ist ihrerseits dazu vorgesehen, im Speichermodus Erntegut aus dem Zuführkanal über wenigstens eine Speicheröffnung aufzunehmen und im Pressmodus Erntegut über wenigstens eine Speicheröffnung an den Zuführkanal abzugeben. Der Speichermodus könnte auch als Bindemodus, Auswurfmodus oder Binde-und-Auswurfmodus bezeichnet werden, da dieser Modus gewählt werden kann, während der Erntegutballen gebunden und/oder ausgeworfen wird, so dass der Presskammer kein Erntegut zugeführt werden kann. In diesem Speichermodus ist vorgesehen, dass Erntegut aus dem Zuführkanal über wenigstens eine Speicheröffnung (bevorzugt: die Speicheröffnung) in den Speicherraum der Speichervorrichtung gelangt, wo es zwischengespeichert werden kann. Wenn der Binde- und Auswurfvorgang beendet ist, kann der Presskammer wieder Erntegut zugeführt werden und die Rundballenpresse kann wieder in den Pressmodus wechseln. Das zuvor zwischengespeicherte Erntegut kann dann über wenigstens eine Speicheröffnung (bevorzugt: die Speicheröffnung) an den Zuführkanal abgegeben werden.

Die erfindungsgemäße Rundballenpresse ermöglicht u.U. eine ununterbrochene Erntegutaufnahme, so dass ein Anhalten zum Binden und/oder Auswerfen des Ballens unnötig ist. Vor allem bedeutet dies einen wesentlichen Zeitvorteil, da die genannten Vorgänge einen wesentlichen Anteil der Gesamtzeit zur Bereitstellung eines Erntegutballens beanspruchen (bspw. ca. ein Drittel, während die übrigen zwei Drittel für die Ballenbildung benötigt werden). Unter Umständen kann auch der Energieverbrauch gesenkt werden, da das Anhalten und erneute Anfahren für jeden Bindevorgang entfallen. Die Ausgestaltung der Speichervorrichtung mit einem nach Art eines Umlaufförderers arbeitenden Speicherförderer bietet dabei besondere Vorteile. Das Erntegut kann an einer Stelle, im Bereich einer Speicheröffnung, in den Speicherraum eingebracht werden und wird dann vom Speicherförderer sogleich weitertransportiert, wodurch an dieser Stelle Platz für nachfolgendes Erntegut geschaffen wird. Sofern an einer Stelle des Speicherförderers noch vergleichsweise wenig Erntegut geführt wird, kann nach einem Umlauf des Speicherförderers hier weiteres Erntegut hinzugefügt werden, so dass der Speicherraum sukzessive optimal gefüllt werden kann. Der Speicherförderer lässt sich mechanisch einfach und mit wenigen beweglichen Teilen realisieren, wie nachfolgend noch erläutert wird. Außerdem ist die äußere Begrenzung des Speicherraums bevorzugt durch eine starre Speicherwandung fester Größe bestimmt. Diese Speicherwandung kann ein Widerlager zum Komprimieren des Ernteguts durch den Speicherförderer bilden. Sie lässt sich robust und ohne bewegliche Teile realisieren. Beim Leeren des Speicherraums ist die in sich geschlossene Förderbahn des Speicherförderers wiederum von Vorteil, da wiederum an einer Stelle benachbart zur Speicheröffnung Erntegut abgegeben, d.h. entnommen, werden kann, wonach der Speicherförderers unmittelbar weiteres Erntegut an diese Stelle transportiert. Sofern nicht alles Erntegut an einer Stelle des Speicherförderers entnommen wurde, kann dies beim nächsten Umlauf geschehen. Auch das Entnehmen bzw. Abgeben des Ernteguts kann somit sukzessive, bspw. schichtweise erfolgen. Dadurch, dass der Übergaberotor der Übergabevorrichtung in beiden Betriebsmodi zum Führen und/oder Fördern des Erntegutstroms dient, lässt sich die Anzahl der notwendigen Komponenten reduzieren und der Gesamtaufbau der Rundballenpresse vereinfachen. Diese kann daher kompakter ausgestaltet sein. Auch der Übergaberotor als solcher lässt sich vergleichsweise einfach und mechanisch robust realisieren.

Wie bereits oben erläutert, ist die Rundballenpresse bevorzugt dazu eingerichtet, im Pressmodus wenigstens zeitweise einen von einer Aufnahmevorrichtung kommenden Aufnahme-Erntegutstrom mit einem von der Speichervorrichtung kommenden Speicher-Erntegutstrom zu einem Gesamt-Erntegutstrom zusammenzuführen und diesen der Presskammer zuzuführen. Die Aufnahmevorrichtung (z.B. eine Pick-up) ist dazu eingerichtet, Erntegut von einem Feld aufzunehmen und dem Zuführkanal zuzuführen.

Allgemein ist der Speicherförderer umlaufend antreibbar, was grundsätzlich unterschiedliche Ausgestaltungen und hiermit verbundene Bewegungsbahnen ermöglicht. Eine bevorzugte Ausgestaltung sieht vor, dass der Speicherförderer um eine Speicherachse rotatorisch antreibbar ist, wobei die Speicherwandung wenigstens überwiegend rotationssymmetrisch zur Speicherachse ausgebildet ist. Der Speicherförderer rotiert also um die Speicherachse, welche bspw. zentral durch das o.g. Speicherförderer-Innenteil verlaufen kann. Er kann insofern auch als Speicherrotor bezeichnet werden. Soweit der Speicherförderer in sich starr ausgebildet ist, bewegen sich sämtliche Teile und/oder Abschnitte desselben auf Kreisbahnen um die Speicherachse. Dies gilt insbesondere auch für die äußersten Punkte der Speicherzinken, die somit in dichtem Abstand an der Speicherwandung vorbeigeführt werden können, wenn diese ebenfalls rotationssymmetrisch zur Speicherachse ausgebildet ist. Insbesondere kann die Speicherwandung wenigstens abschnittsweise zylindrisch und/oder zylindermantelförmig ausgebildet sein, wobei die wenigstens eine Speicheröffnung einen Ausschnitt im Zylindermantel bildet.

Des Weiteren ist es bevorzugt, insbesondere in Kombination mit der vorgenannten Ausführungsform, dass der Speicherförderer ein Speicherförderer-Innenteil mit einer den Speicherraum nach innen begrenzenden Fördererwandung aufweist sowie vom Speicherförderer-Innenteil zur Speicherwandung hin abragende Speicherzinken. Dabei wirkt eine Antriebskraft und/oder ein Antriebsdrehmoment des Speicherförderers in aller Regel auf das Speicherförderer-Innenteil, welches seinerseits als Träger für die Speicherzinken wirkt und diese mit bewegt. Die Fördererwandung des Speicherförderer-Innenteils liegt der Speicherwandung gewissermaßen gegenüber und definiert mit dieser zusammen den Speicherraum, der dem Erntegut zur Verfügung steht. Die Speicherzinken bilden dabei Förderelemente bzw. Förderorgane, die die Antriebskraft des Speicherförderers auf das Erntegut übertragen und dieses zu der umlaufenden Bewegung antreiben. Man kann auch sagen, dass die Speicherzinken das Erntegut vor sich herschieben. In aller Regel ist jeder Speicherzinken in sich starr ausgebildet, wenngleich eine gewisse Elastizität möglich ist. Typischerweise bestehen die Speicherzinken aus Metall, bspw. Stahl. Der Begriff "Zinken" ist hinsichtlich der Form nicht einschränkend auszulegen. Eine typische Bauform sieht allerdings vor, dass wenigstens ein Teil des Speicherzinkens flächig, bspw. aus Metallblech, ausgebildet ist, wobei die Schmalseite des Zinkens in Bewegungsrichtung zeigt. Ein derart orientiertes Metallblech kann allerdings auch einen Basisabschnitt des Zinkens bilden, mit dem ein Aufsatz verbunden, bspw. verschweißt, ist. Der Aufsatz kann seinerseits durch einen Blechstreifen gebildet sein, dessen Schmalseite allerdings im Winkel, bspw. im rechten Winkel, zur Bewegungsrichtung orientiert ist. Bei dieser Ausgestaltung kann der Aufsatz den Basisabschnitt gewissermaßen abschirmen und vor Verschleiß schützen. Außerdem können sich Aufsatz und Basisabschnitt gegenseitig mechanisch stabilisieren, so dass sich mit weniger Material ein insgesamt stabilerer Speicherzinken realisieren lässt.

Um die Konstruktion des Speicherförderers einfach und robust zu halten, sind die Speicherzinken bevorzugt starr mit dem Speicherförderer-Innenteil verbunden. Dementsprechend wird die Bewegung des Speicherförderer-Innenteils - abgesehen von einer möglicherweise gegebenen Elastizität der Speicherzinken - unmittelbar auf die Speicherzinken übertragen.

Es sind Ausführungsformen denkbar, bei denen die Übergabeachse stationär bezüglich des Rahmens der Rundballenpresse angeordnet ist. In der Regel lässt sich die Funktionsweise allerdings dadurch optimieren, dass der Übergaberotor drehbar an einem Rotorträger gelagert ist, der gegenüber einem Rahmen der Rundballenpresse verstellbar ist. Die Übergabeachse verläuft hierbei durch den Rotorträger und verändert ihre Position, wenn der Rotorträger verstellt wird. Hierdurch kann je nach Betriebsmodus oder je nach Phase des Betriebsmodus eine optimale Position des Übergaberotors eingestellt werden. Die Verstellung des Rotorträgers erfolgt selbstverständlich durch wenigstens einen Aktor, bspw. elektrisch, hydraulisch, elektrohydraulisch oder pneumatisch.

Dabei ist bevorzugt vorgesehen, dass der Übergaberotor in Abhängigkeit von der Stellung des Rotorträgers durch eine Speicheröffnung in den Speicherraum eingreift. Dies kann bedeuten, dass der Übergaberotor je nach Stellung des Rotorträgers in den Speicherraum eingreift oder nicht. Alternativ oder zusätzlich kann es bedeuten, dass der Übergaberotor je nach Stellung des Rotorträgers unterschiedlich weit in den Speicherraum eingreift. Auf diese Weise kann der Speicherrotor je nach Bedarf Bereiche des Speicherraums erreichen, die nahe der Speicheröffnung angeordnet sind oder weiter von dieser entfernt. Dies kann sowohl für das Hineinfördern von Erntegut in den Speicherraum als auch für das Ausfördern von Erntegut von Vorteil sein.

Es ist möglich, dass der Rotorträger in wenigstens einer Stellung eine Speicheröffnung wenigstens teilweise verschließt, wobei er eine Verlängerung der Speicherwandung bildet. Es kann sich insbesondere um eine Stellung handeln, in welcher der Speicherrotor maximal in den Speicherraum eingreift. D.h. in der entsprechenden Stellung bildet der Rotorträger und/oder ein Abschnitt seiner Wandung gewissermaßen eine Fortführung der Speicherwandung. Im Falle einer bezüglich der Speicherachse rotationssymmetrischen Speicherwandung kann der entsprechende Abschnitt der Wandung des Rotorträgers kreisbogenförmig ausgestaltet sein und somit die Speicherwandung ergänzen.

Das Eingreifen der Übergabezinken kann u.a. in Abhängigkeit vom Erntegut eingestellt werden. Dabei können die Art des Ernteguts, sein Zustand (z.B. der Feuchtigkeitsgehalt) oder andere Eigenschaften als Parameter herangezogen werden. In Abhängigkeit hiervon können die Übergabezinken mehr oder weniger weit in den Speicherraum eingreifen.

Um ein effektives Zusammenwirken mit einem Abstreifer zu ermöglichen (unabhängig davon, ob dieser an einem Rotorträger ausgebildet ist oder bspw. stationär am Rahmen angeordnet), ist es bevorzugt, dass die Übergabezinken auf einer in Kammerzuführrichtung vorne angeordneten Kammerzuführseite und/oder auf einer in Speicherzuführrichtung vorne angeordneten Speicherzuführseite eine Rückwärtsneigung aufweisen, so dass die jeweilige Kante des Übergabezinkens radial nach außen hin tangential zurückweicht. Die Speicherzuführseite entspricht dabei in tangentialer Richtung derjenigen Seite, die bei einer Rotation in Speicherzuführrichtung in Bewegungsrichtung der Übergabezinken liegt, während die Kammerzuführseite bei einer Rotation in Kammerzuführrichtung in Bewegungsrichtung der Übergabezinken liegt. Die Begriffe "Vorwärtsneigung" bzw. "Rückwärtsneigung" bezeichnen hierbei jeweils eine Neigung gegenüber der axial-radialen Ebene. Eine Rückwärtsneigung bezeichnet eine Neigung, bei der die Kante wie beschrieben nach außen hin (also zu einem radial äußeren Ende hin) tangential zurückweicht. Eine Vorwärtsneigung wäre dementsprechend eine, bei der die Kante nach außen hin tangential vorspringt. Dies ist immer bezogen auf die Richtung, in die die jeweilige Kante tangential weist, also in diesem Fall die Speicherzuführrichtung oder Kammerzuführrichtung. Durch die Rückwärtsneigung ist es möglich, im Zusammenwirken mit dem Abstreifer eine radial nach außen wirkende Kraftkomponente auf das Erntegut zu erzeugen, so dass dieses nach außen abgestreift wird.

Dabei können die Speicherzinken auf der Förderseite eine Rückwärtsneigung aufweisen und die Übergabezinken auf der Kammerzuführseite eine Rückwärtsneigung aufweisen, welche schwächer ist als die der Speicherzinken. Wenn der Speicherrotor in den Speicherraum eingreift, wirken sowohl Speicherzinken als auch Übergabezinken auf das Erntegut ein. Die hier beschriebene Ausgestaltung sorgt dafür, dass sich insgesamt eine bezüglich der Speicherachse radial nach außen gerichtete Kraftkomponente auf das Erntegut ergibt, wodurch dieses also radial nach außen aus dem Speicherraum gefördert werden kann.

Um das Einfördern von Erntegut zu erleichtern und um zu verhindern, dass das Erntegut zwischen Übergabezinken und Speicherzinken übermäßig gequetscht wird, ist es bevorzugt, dass die Übergabezinken auf einer in Speicherzuführrichtung vorne angeordneten Speicherzuführseite eine Rückwärtsneigung aufweisen, welche stärker ist als eine Neigung, die die Speicherzinken auf einer der Förderseite gegenüberliegenden Rückseite aufweisen. Die Neigung auf der Rückseite, welche der Förderseite gegenüberliegt, kann eine geringere Rückwärtsneigung sein, eine Vorwärtsneigung, oder sie kann Null betragen, also die Rückseite der Speicherzinken kann parallel zur axial-radialen Ebene verlaufen.

Wie bereit erläutert wurde, vereinigen sich im Pressmodus der Aufnahme-Erntegutstrom, der unmittelbar vom Feld aufgenommen wurde, und der Speicher-Erntegutstrom aus der Speichervorrichtung und werden gemeinsam zur Presskammer geführt. Hierdurch ergibt sich ein erheblicher Gesamt-Erntegutstrom. Dieser kann einerseits durch eine Erhöhung der Fördergeschwindigkeit des Übergaberotors bewältigt werden. Alternativ oder zusätzlich kann eine lokale Anpassung des Querschnitts erfolgen, durch welchen sich der Erntegutstrom bewegt. Eine Ausgestaltung sieht vor, dass die Rundballenpresse dazu eingerichtet ist, eine am Übergang vom Zuführkanal zur Presskammer angeordnete Starterwalze im Pressmodus aus einer oberen Walzenposition in eine untere Walzenposition zu verstellen und in dieser zumindest zu halten, bis der Speicherraum geleert ist. Derartige Starterwalzen dienen bei Rundballenpressen allgemein dazu, zusammen mit anderen Presselementen den Erntegutballen zu pressen. Zu Beginn der Ballenbildung fördert sie das Erntegut z.B. unmittelbar gegen ein umlaufendes Presselement (z.B. die Pressriemen) und im weiteren Verlauf gegen den sukzessive wachsenden Erntegutballen. Der Erntegutstrom läuft oberhalb der Starterwalze in die Presskammer. Die genannte obere Walzenposition entspricht einem geringeren Querschnitt, den der Erntegutstrom durchqueren kann, während die untere Walzenposition einem größeren Querschnitt entspricht, der für den Pressmodus günstig ist, zumindest solange der Speicherraum nicht geleert wurde.

Vorteilhaft weist der Zuführkanal unterhalb des Übergaberotors einen Rotor-Bodenabschnitt auf, wobei die Rundballenpresse dazu eingerichtet ist, wenigstens einen bezüglich des Gutstroms vorderen Bereich des Rotor-Bodenabschnitts abwärts zu verstellen, wenn der Übergaberotor aus dem Speicherraum herausbewegt wird, und aufwärts zu verstellen, wenn der Übergaberotor in den Speicherraum hineinbewegt wird. Durch das Verstellen des vorderen Bereichs (oder optional des gesamten Rotor-Bodenabschnitts) kann das Bodenprofil des Zuführkanals an die sich ändernde Position des Übergaberotors angepasst werden, so dass sich der Abstand zwischen Übergaberotor (z.B. dessen Übergabezinken) und dem vorderen Bereich nicht zu stark ändert. D.h. der Abstand wird nicht zu groß, wodurch evtl. Erntegut nicht mehr effektiv erfasst werden könnte, und auch nicht zu klein, was den effektiven Querschnitt des Zuführkanals einschränken würde oder sogar die Gefahr einer Kollision zwischen Übergaberotor und Rotor-Bodenabschnitt mit sich bringen könnte. Der vordere Bereich kann insbesondere über wenigstens ein Kopplungselement (z.B. wenigstens eine erste Kopplungsstrebe) mit der Übergabevorrichtung verbunden sein. Auf diese Weise ist seine Verstellung an die Verstellung der Übergabevorrichtung zwangsgekoppelt, normalerweise an die Verstellung des Rotorträgers. Zusätzlich kann der vordere Bereich gegenüber dem Rahmen geführt sein, z.B. über eine Kulissenführung.

Weiterhin vorteilhaft ist die Rundballenpresse dazu eingerichtet, wenigstens einen bezüglich des Gutstroms hinteren Bereich des Rotor-Bodenabschnitts im Pressmodus zum Entleeren des Speicherraums abwärts zu verstellen und nach dem Entleeren des Speicherraums aufwärts zu verstellen. Der hintere Bereich ist im Allgemeinen benachbart zu einer o.g. Starterwalze angeordnet oder zumindest dieser zugewandt. Das Verstellen des hinteren Bereichs kann synchron zur Verstellung der Starterwalze erfolgen. Soweit der vordere Bereich wie oben beschrieben verstellbar ist, sind vorderer und hinterer Bereich bevorzugt unabhängig voneinander verstellbar. Die Verstellung des hinteren Bereichs dient wie die Verstellung der Starterwalze vor allem zur Anpassung des effektiven Querschnitts des Zuführkanals an den zu fördernden Erntegutstrom. Der hintere Bereich kann insbesondere über wenigstens ein Kopplungselement (z.B. wenigstens eine zweite Kopplungsstrebe) mit der Starterwalze verbunden sein. Somit ist seine Verstellung an die Verstellung der Starterwalze zwangsgekoppelt.

Vorteilhaft weist der Speicherförderer eine Mehrzahl von bezüglich der Speicherachse zueinander axial versetzt angeordneten Speicherzinkenkränzen auf, wobei jeder Speicherzinkenkranz eine Mehrzahl von tangential zueinander versetzt angeordneten Speicherzinken aufweist. Die Speicherzinken, die einem Speicherzinkenkranz zugeordnet sind, haben dabei bezüglich der Speicherachse normalerweise gleiche oder nur geringfügig voneinander abweichende axiale Positionen. Die Anzahl der Speicherzinken in einem Speicherzinkenkranz kann unterschiedlich gewählt werden, normalerweise sind zwischen 3 und 10 Speicherzinken pro Speicherzinkenkranz vorgesehen. Dabei ist eine Mehrzahl von Speicherzinkenkränzen vorgesehen, von denen jeder in der Regel die gleiche Anzahl Speicherzinken aufweist. Die Speicherzinkenkränzen sind axial zueinander versetzt. Ebenfalls vorteilhaft weist der Übergaberotor eine Mehrzahl von bezüglich der Übergabeachse zueinander axial und tangential versetzt angeordneten Zinkenkränzen auf, wobei jeder Zinkenkranz eine Mehrzahl von tangential zueinander versetzt angeordneten Übergabezinken aufweist. Die Übergabezinken, die einem Zinkenkranz zugeordnet sind, haben dabei bezüglich der Übergabeachse normalerweise gleiche oder nur geringfügig voneinander abweichende axiale Positionen. Die Anzahl der Übergabezinken in einem Zinkenkranz kann unterschiedlich gewählt werden, normalerweise sind zwischen 3 und 6 Übergabezinken pro Zinkenkranz vorgesehen. Dabei ist eine Mehrzahl von Zinkenkränzen vorgesehen, von denen jeder in der Regel die gleiche Anzahl Übergabezinken aufweist. Die Zinkenkränzen sind axial zueinander versetzt.

Zusätzlich können die Speicherzinkenkränze und/oder die Übergabezinkenkränze bevorzugt tangential zueinander versetzt sein, was bedeutet, dass die Zinken unterschiedlicher Zinkenkränze unterschiedliche tangentiale Positionen bezüglich der Speicherachse und/oder bezüglich der Übergabeachse aufweisen. Dies kann insbesondere den Vorteil haben, dass so versetzten Zinken im Zuge der Rotation normalerweise zu unterschiedlichen Zeitpunkten mit einer bestimmten Menge Erntegut zusammenwirken, bspw. in das Erntegut einstechen. Auf diese Weise können kurzzeitig auftretende Kraft- und/oder Drehmomentspitzen vermieden werden. Insbesondere bei einer großen Anzahl von Zinkenkränzen ist es möglich, dass der Speicherförderer und/oder der Übergaberotor trotz des beschriebenen tangentialen Versatzes auch Paare oder Gruppen von Zinkenkränzen aufweist, die nicht zueinander versetzt sind. Diese machen allerdings jeweils nur einen geringen Teil der Gesamtzahl an Zinkenkränzen aus.

Es ist bevorzugt, dass der Übergaberotor eine Mehrzahl von bezüglich der Übergabeachse zueinander durch erste Zwischenräume axial beabstandeten Übergabezinkenkränzen aufweist und der Speicherförderer eine Mehrzahl von bezüglich der Speicherachse zueinander durch zweite Zwischenräume axial beabstandeten Speicherzinkenkränzen aufweist, wobei beim Eingreifen des Übergaberotors in den Speicherraum die Speicherzinkenkränze in erste Zwischenräume eingreifen und die Übergabezinkenkränze in zweite Zwischenräume eingreifen. D.h. benachbarte Übergabezinkenkränze sind in axialer Richtung bezüglich der Speicherachse so weit beabstandet, dass zwischen ihnen jeweils ein erster Zwischenraum ausgebildet ist. Dieser erstreckt sich dann tangential umlaufend um die Speicherachse herum. In diesen ersten Zwischenraum, der innerhalb des Speicherraums angeordnet ist, greift jeweils ein Übergabezinkenkranz ein. Entsprechend sind benachbarte Übergabezinkenkränze in axialer Richtung bezüglich der Übergabeachse so weit beabstandet, dass zwischen ihnen jeweils ein zweiter Zwischenraum ausgebildet ist. Dieser erstreckt sich dann tangential umlaufend um die Übergabeachse herum. In diesen zweiten Zwischenraum greift jeweils ein Speicherzinkenkranz ein. Durch diese Anordnung ist es zum einen möglich, dass sich die Übergabezinken und die Speicherzinken entgegengesetzt bewegen können, ohne zu kollidieren. Außerdem ist es möglich, dass sie sich bei gleichgerichteter Bewegung unterschiedlich schnell bewegen können, was ebenfalls vorteilhaft sein kann.

Bevorzugt ist die Rundballenpresse dazu eingerichtet, den Speicherförderer sowohl im Pressmodus als auch im Speichermodus durchgehend in einer gleichbleibenden Speicherförderrichtung anzutreiben. D.h., der Speicherförderer wird weder angehalten, noch erfolgt eine Umkehrung der Antriebsrichtung, im Falle eines rotatorischen angetriebenen Speicherförderers also der Drehrichtung. Entsprechend vereinfacht sich die Ansteuerung des Speicherförderers und auch die Übertragung einer Antriebskraft auf denselben. Ein Motor sowie ggf. vorhandene Mittel zur Kraftübertragung können stets in einer Richtung arbeiten. Außerdem lässt sich bei Speicherzinken eine Seite definieren, die stets in Bewegungsrichtung vorne liegt und dementsprechend hinsichtlich Stabilität und Formgebung angepasst werden kann. Weiterhin ist die Rundballenpresse bevorzugt dazu eingerichtet, den Speicherförderer durchgehend mit konstanter Geschwindigkeit anzutreiben. Die tatsächliche Geschwindigkeit des Speicherförderers kann auch in dieser Ausgestaltung Schwankung aufweisen, welche allerdings normalerweise geringfügig sind (bspw. weniger als 10 % oder weniger als 5 %). Seitens der Rundballenpresse, bspw. seitens einer Steuereinheit derselben, ist jedoch vorgesehen, dass die Geschwindigkeit, z.B. die Rotationsgeschwindigkeit, gleich bleibt. Dies vereinfacht die Ansteuerung und die Erzeugung und/oder Übertragung der Antriebskraft für den Speicherförderer weiter.

Vorteilhaft ist die Rundballenpresse derart eingerichtet, dass eine Fördergeschwindigkeit des Übergaberotors im Pressmodus wenigstens einer Fördergeschwindigkeit des Speicherförderers entspricht. D.h. die Rundballenpresse ist dazu eingerichtet, den Übergaberotor und den Speicherförderer im Pressmodus derart anzutreiben, dass die genannte Relation der Geschwindigkeiten gilt. Die Fördergeschwindigkeiten sind dabei die Geschwindigkeiten, mit denen sich die Förderelemente (z.B. Speicherzinken, Übergabezinken) bewegen. Allgemein ist somit die Fördergeschwindigkeit diejenige Geschwindigkeit, mit der Erntegut (maximal) förderbar ist. Sofern sich wie im Falle des Übergaberotors oder des Speicherrotors nicht alle Teile des Förderelements gleich schnell bewegen (aufgrund der rotatorischen Bewegung), kann die Geschwindigkeit eines radial mittleren Teils des Förderelements betrachtet werden. Im Pressmodus fördert der Übergaberotor Erntegut aus dem Speicherraum heraus, wobei z.B. Speicherzinken und Übergabezinken durch die o.g. Zwischenräume aneinander vorbeilaufen können. In diesem Zustand kann durch einen schnell laufenden Übergaberotor das Ausfördern beschleunigt werden. Die Relativgeschwindigkeit, mit welcher die Förderelemente des Übergaberotors auf das vom Speicherförderer bewegte Erntegut treffen, entspricht in etwa der Summe der Fördergeschwindigkeiten, da der Übergaberotor hier dem Speicherförderer entgegenläuft.

Ebenfalls vorteilhaft ist die Rundballenpresse derart eingerichtet, dass eine Fördergeschwindigkeit des Übergaberotors im Speichermodus kleiner ist als eine Fördergeschwindigkeit des Speicherförderers. In diesem Zustand entspricht die Relativgeschwindigkeit, mit welcher die Förderelemente des Speicherförderer auf das vom Übergaberotors herangeförderte Erntegut treffen, in etwa der Differenz der Fördergeschwindigkeiten, da der Übergaberotor in gleicher Richtung läuft wie der Speicherförderer. Dadurch, dass der Speicherförderer schneller fördert als der Übergaberotor, kann Erntegut vom Übergaberotor abgezogen werden und/oder die Speicherzinken, soweit vorhanden, können das Erntegut von den langsamer laufenden Übergabezinken abstreifen.

Durch die Erfindung wird des Weiteren eine Speicheranordnung für eine Rundballenpresse zur Verfügung gestellt, welche einen zu einer Presskammer führenden Zuführkanal aufweist, wobei die Speicheranordnung eine Übergabevorrichtung mit einem Übergaberotor aufweist, der um eine Übergabeachse in einer Kammerzuführrichtung antreibbar ist, um in einem Pressmodus Erntegut durch den Zuführkanal in Richtung der Presskammer zu fördern, sowie eine Speichervorrichtung mit einem Speicherraum zur zeitweisen Aufnahme von Erntegut, welcher wenigstens eine Speicheröffnung zur Verbindung mit dem Zuführkanal aufweist.

Erfindungsgemäß weist die Speichervorrichtung eine Speicherwandung auf, die den Speicherraum nach außen begrenzt, sowie einen antreibbaren Speicherförderer zum umlaufenden Fördern von Erntegut innerhalb des Speicherraums, wobei der Übergaberotor dazu eingerichtet ist, in einem Speichermodus unter Drehung in einer der Kammerzuführrichtung entgegengesetzten Speicherzuführrichtung Erntegut aus dem Zuführkanal zur Zwischenspeicherung in Richtung des Speicherraums zu führen und im Pressmodus von der Speichervorrichtung abgegebenes Erntegut durch den Zuführkanal in Richtung der Presskammer zu fördern.

Die genannten Begriffe wurden bereits im Zusammenhang mit der erfindungsgemäßen Rundballenpresse erläutert und werden daher nicht nochmals erklärt. Vorteilhafte Ausgestaltungen der erfindungsgemäßen Speicheranordnung entsprechen denen der erfindungsgemäßen Rundballenpresse.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Seitenansicht einer Schnittdarstellung einer erfindungsgemäßen Rundballenpresse, mit einer erfindungsgemäßen Speicheranordnung, in einem Pressmodus;
- Fig. 2: eine Seitenansicht einer Schnittdarstellung der Rundballenpresse aus Fig.1 in einem Speichermodus;
- Fig. 3: eine weitere Seitenansicht einer Schnittdarstellung der Rundballenpresse aus Fig.1 im Pressmodus;
- Fig. 4: eine weitere Seitenansicht einer Schnittdarstellung der Rundballenpresse aus Fig.1 im Pressmodus;
- Fig. 5: eine Seitenansicht der Speicheranordnung der Rundballenpresse aus Fig. 1;
- Fig. 6: eine perspektivische Darstellung der Speicheranordnung aus Fig. 5; und
- Fig. 7: eine rückwärtige Ansicht der Speicheranordnung aus Fig. 5.

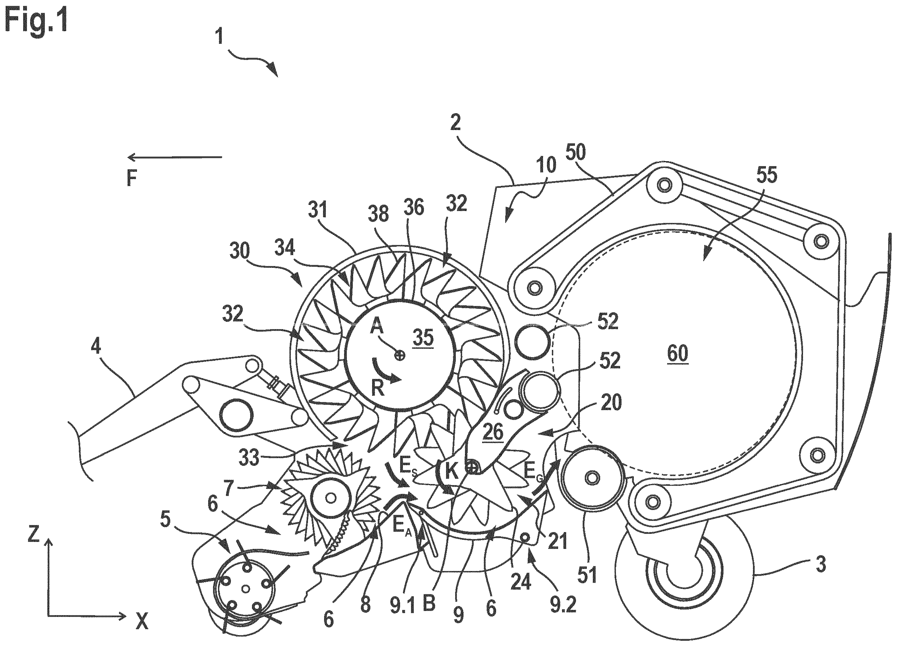

Fig. 1 zeigt eine Rundballenpresse 1 gemäß der vorliegenden Erfindung. Eine Längsachse X der Rundballenpresse 1 weist entgegen der Fahrtrichtung F nach hinten und eine Hochachse Z weist nach oben. An einem Rahmen 2 der Rundballenpresse 1 sind Laufräder 3 drehbar gelagert, auf welchen die Rundballenpresse 1 aufsteht. Die Rundballenpresse 1 ist in bekannter Weise dazu vorgesehen, von einer Zugmaschine, insbesondere einem Traktor (nicht dargestellt), gezogen zu werden, wozu sie eine Deichsel 4 aufweist. Die Erfindung ist aber nicht auf gezogene oder getragene Rundballenpressen 1 beschränkt, sondern umfasst auch selbstfahrende Rundballenpressen 1. In Fahrtrichtung F vorderseitig ist eine Pick-up 5 erkennbar, die im Betrieb (bezogen auf Fig. 1) im Uhrzeigersinn rotiert. Sie dient dazu, Erntegut, genauer gesagt Halmgut wie Stroh, Heu oder Gras, vom Boden aufzunehmen und als einen Aufnahme-Erntegutstrom E_{A} weiter in einen Zuführkanal 6 zu fördern, der zu einer Presskammer 55 führt. Von der Pick-up 5 gelangt das Erntegut durch den Zuführkanal 6 zu einem Schneidrotor 7, der entgegen dem Uhrzeigersinn rotiert. Er weist eine Mehrzahl von Zinken auf, die das Erntegut ergreifen, es im Zusammenwirken mit feststehenden Messern (ohne Bezugszeichen) schneiden und weiter entgegen der Fahrtrichtung F und leicht aufwärts durch den Zuführkanal 6 transportieren. Anstelle des Schneidrotors 7 könnte auch ein Förderrotor eingesetzt werden, der das Erntegut nur fördert und nicht zerkleinert.

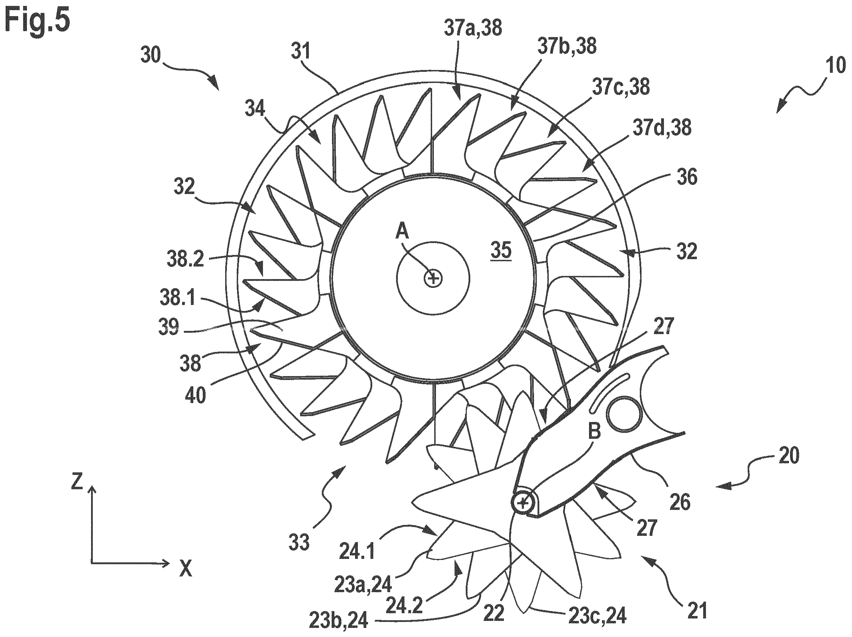

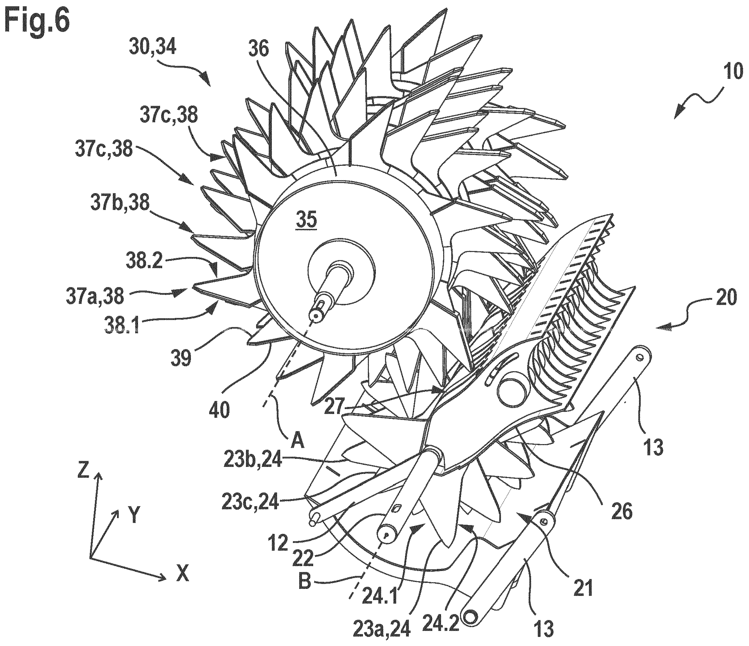

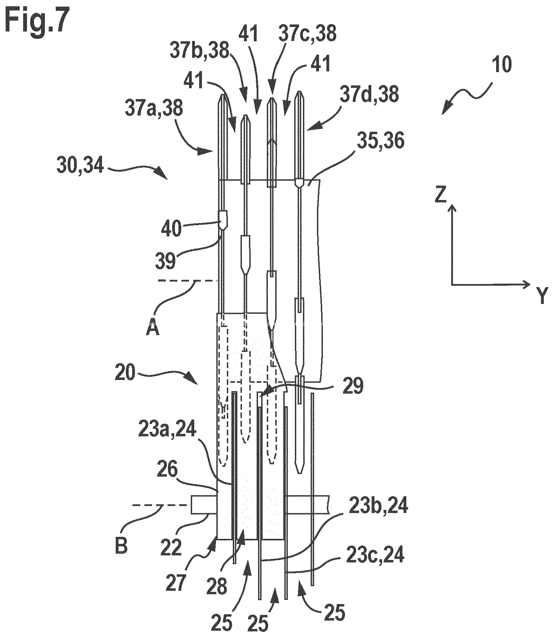

Auf dem Weg zur Presskammer 55 passiert der Aufnahme-Erntegutstrom E_{A} einen aufwärts geneigten Leit-Bodenabschnitt 8 unterhalb einer Speicheröffnung 33. Oberhalb der Speicheröffnung 33 schließt sich eine Speichervorrichtung 30 an, mit einer Speicherwandung 31, die einen Speicherraum 32 nach außen begrenzt. Die Speicherwandung 31 ist überwiegend rotationssymmetrisch zu einer Speicherachse A ausgebildet Der Speicherraum 32 steht über die Speicheröffnung 33 mit dem Zuführkanal 6 in Verbindung. Ein als Speicherrotor ausgebildeter Speicherförderer 34 ist um die Speicherachse A rotatorisch antreibbar. Er weist ein überwiegend zylindrisches Speicherförderer-Innenteil 35 mit einer den Speicherraum 32 nach innen begrenzenden Fördererwandung 36 auf. Vom Speicherförderer-Innenteil 35 ragen eine Mehrzahl von Speicherzinken 38 zur Speicherwandung 31 hin ab. Wie in Fig. 5 bis 7 erkennbar, sind die Speicherzinken 38 in Speicherzinkenkränzen 37a-37d gruppiert, welche bezüglich der Speicherachse A zum einen axial beabstandet sind sowie zum anderen tangential versetzt sind. Im vorliegenden Beispiel weist jeder Speicherzinkenkranz 37a-37d sechs Speicherzinken 38 auf und axial benachbarte Speicherzinkenkränze 37a-37d sind jeweils um 15° tangential versetzt. Zwischen benachbarten Speicherzinkenkränzen 37a-37d sind jeweils axiale Zwischenräume 41 ausgebildet. Der einzelne Speicherzinken 38 weist einen radial-tangential verlaufenden Basisabschnitt 39 auf sowie einen hiermit verbundenen, axial verlaufenden Aufsatz 40, welche beide aus Stahlblech gefertigt sein können. Wie in Fig. 1 bis 4 angedeutet, wird der Speicherförderer in einer Speicherförderrichtung R (in den Figuren im Gegenuhrzeigersinn) angetrieben. Eine bezüglich der Speicherförderrichtung R vorne liegende Förderseite 38.1 der Speicherzinken 38 weist eine Rückwärtsneigung auf, d.h. die Kante des jeweiligen Speicherzinkens 38 weicht radial nach außen hin tangential zurück. Im gezeigten Beispiel beträgt die Neigung gegenüber der radialen Richtung ca. 29°. Auf einer der Förderseite 38.1 gegenüberliegenden Rückseite 38.2 weisen die Speicherzinken 38 hingegen keine Neigung auf, d.h. sie verlaufen radial.

Im Weiteren passiert der Erntegutstrom einen bogenartig ausgebildeten Rotor-Bodenabschnitt 9, wobei er durch einen Übergaberotor 21 gefördert wird. Der Übergaberotor 21 ist Teil einer Übergabevorrichtung 20, welche zusammen mit der Speichervorrichtung 30 eine Speicheranordnung 10 der Rundballenpresse 1 bildet. Er ist an einem gegenüber dem Rahmen 2 verstellbaren Rotorträger 26 drehbar gelagert, genauer gesagt ist er um eine parallel zur Querachse Y verlaufende Übergabeachse B antreibbar. Der Rotorträger 26 ist im Bereich des Übergaberotors 21 entlang einer Kreisbahn geführt verstellbar, die zur Achse des Schneidrotors 7 zentriert ist. In einem vom Übergaberotor 21 beabstandeten Bereich ist der Rotorträger 26 über eine erste Kulissenführung 11 bogenartig gegenüber dem Rahmen 2 geführt, und zwar derart, dass er immer dicht entlang der Kante der Speicherwandung 31 entlang geführt wird, welche die Speicheröffnung 33 begrenzt. Er bildet somit eine Verlängerung der Speicherwandung 31. Die Verstellung des Rotorträgers 26 wird durch einen hier nicht dargestellten Aktor bewirkt. Der Übergaberotor 21 weist eine Welle 22 auf, an der eine Mehrzahl von Übergabezinkenkränzen 23a-23c befestigt sind. Jeder Übergabezinkenkranz 23a-23c weist eine Mehrzahl von Übergabezinken 24 auf, in diesem Beispiel jeweils drei, die bezüglich der Übergabeachse B tangential versetzt angeordnet sind. Wie in der Zusammenschau von Fig. 5 bis 7 gut erkennbar ist, sind benachbarte Übergabezinkenkränze 23a-23c axial beabstandet und tangential zueinander versetzt, in diesem Fall um jeweils 30°. Fig. 1 sowie 3 bis 5 zeigt einen Zustand, in welchem der Rotorträger 26 so gegenüber dem Rahmen 2 positioniert ist, dass der Übergaberotor 21 mit den Übergabezinken 24 in die Zwischenräume 41 und somit durch die Speicheröffnung 33 in den Speicherraum 32 eingreift. Ein vorderer Bereich 9.1 des Rotor-Bodenabschnitts 9 ist über eine zweite Kulissenführung 14 am Rahmen 2 geführt und dort über erste Koppelstreben 12 mit der Welle 22 verbunden, wobei sich die Welle gegenüber der ersten Koppelstreben 12 frei drehen kann. Auf diese Weise bewegt sich der vordere Bereich 9.1, durch die zweite Kulissenführung 14 geführt, synchron mit der Welle 22 aufwärts und abwärts, wodurch ein wenigstens annähernd gleichbleibender Abstand zwischen dem Rotor-Bodenabschnitt 9 und den Übergabezinken 24 gewährleistet ist. Somit können sich die Übergabezinken 24 in vergleichsweise geringem Abstand über den Rotor-Bodenabschnitt 9 hinweg bewegen und somit das Erntegut im Zuführkanal 6 optimal erfassen.

Der Rotorträger 26 bildet beiderseits jeweils einen Abstreifer 27 für den Übergaberotor 21. Hierzu weist er Schlitze und/oder Ausnehmungen 29 auf, durch welche die Übergabezinken 24 hindurchgeführt werden. Die Ausnehmungen 29 sind zwischen Abstreiferabschnitten 28 ausgebildet, die dazu dienen, das Erntegut wenigstens überwiegend zurückzuhalten, wenn sich ein Übergabezinken 24 durch eine Ausnehmung 29 hindurchbewegt. Die Übergabezinken 24 weisen auf einer in Speicherzuführrichtung S vorne liegenden Speicherzuführseite 24.1 Speicherzuführseite 24.1 eine stärkere Rückwärtsneigung auf als auf einer in Kammerzuführrichtung K vorne liegenden Kammerzuführseite 24.2. Im vorliegenden Beispiel beträgt die Neigung auf der Speicherzuführseite 24.1 in etwa 20° gegenüber der radialen Richtung, während sie auf der gegenüberliegenden Kammerzuführseite 24.2 nur etwa 17° beträgt. Auf beiden Seiten 24.1, 24.2 muss die Kante nach außen hin tangential zurückweichen, da andernfalls ein Abstreifen von Erntegut am jeweiligen Abstreifer 27 nicht möglich wäre. Im hier gezeigten Beispiel beträgt der Winkel zwischen dem Abstreifer 27 und der Kante des Übergabezinkens 24 (bezogen auf eine Position, in welcher der Übergabezinken schon fast vollständig in eine Ausnehmung 29 eingetaucht ist) ca. 50°, sowohl bezogen auf die Speicherzuführseite 24.1 als auch auf die Kammerzuführseite 24.2. Vorteilhaft könnte der Abstreifer 27 derart modifiziert werden, dass sich ein noch größerer Winkel ergibt, z.B. über 60° oder über 70°.

Die stärkere Neigung auf der Speicherzuführseite 24.1 ist insofern sinnvoll, als hiermit Erntegut in den Speicherraum 32 hinein gefördert wird, weshalb bezüglich der Übergabeachse B eine radial nach außen wirkende Kraftkomponente auf das Erntegut hilfreich ist. Mit der Kammerzuführseite 24.2 hingegen soll Erntegut aus dem Speicherraum 32 heraus gefördert werden, so dass eine radial nach außen wirkende Kraftkomponente hier eher kontraproduktiv ist. Insbesondere ist allerdings auch das Zusammenwirkten der Übergabezinken 24 mit den Speicherzinken 38 zu berücksichtigen, welches im einen Fall für ein Einfördern, im anderen Fall für ein Ausfördern sorgen soll.

Das Einfördern wird allerdings auch dadurch unterstützt, dass die Geschwindigkeiten des Speicherförderers 34 und des Übergaberotors 21 im Speichermodus so abgestimmt sind, dass die Tangentialgeschwindigkeit der Speicherzinken 38 größer ist als die Tangentialgeschwindigkeit der Übergabezinken 24, bezogen auf Bereiche der Zinken 24, 38, die miteinander indirekt zusammenwirken. Somit ziehen die Speicherzinken 38 das Erntegut aktiv von den Übergabezinken ab.

In der Presskammer 55 erfolgen die eigentliche Ballenbildung und das Verpressen des Ernteguts zu einem Erntegutballen 60. Hierzu sind eine Starterwalze 51, zwei Presswalzen 52 sowie eine Mehrzahl von (senkrecht zur Zeichenebene nebeneinander angeordneten) endlosen Presselementen 50 (in diesem Fall Pressriemen) vorgesehen, die die Presskammer 55 definieren und eine variable Größe derselben ermöglichen. Statt der Pressriemen könnte aber auch z.B. ein Kettenstabförderer eingesetzt werden oder es könnte auch eine Presskammer 55 mit fester Größe vorgesehen sein. Die Starterwalze 51 ist gegenüber dem Rahmen 2 verstellbar, um bei Bedarf den Querschnitt des Zugangs zur Presskammer 55 vergrößern zu können. Ein hinterer Bereich 9.2 des Rotor-Bodenabschnitts 9 ist über zweite Koppelstreben 13 mit der Achse der Starterwalze 51 verbunden, so dass er deren Bewegung folgt, wenn sie verstellt wird.

Fig.1 zeigt die Rundballenpresse 1 in einem Pressmodus, in welchem der Übergaberotor 21 das Erntegut durch den Zuführkanal 6 zur Presskammer 55 hin fördert. Im Pressmodus dreht sich der Übergaberotor 21 in einer Kammerzuführrichtung K, bezüglich Fig.1 im Gegenuhrzeigersinn. Die Speichervorrichtung 30 ist dabei vollständig entleert. Ein von der Pick-up 5 kommender Aufnahme-Erntegutstrom E_{A} wird der Presskammer 55 zugeführt. Dargestellt ist ein Zustand, in welchem der Erntegutballen 60 seine vorbestimmte Größe erreicht hat, also eine Endphase des Pressmodus. Die Starterwalze 51, welche gegenüber dem Rahmen 2 verstellbar ist, ist in einer oberen Walzenposition angeordnet. Der vordere Bereich 9.1 sowie der hintere Bereich 9.2 des Rotor-Bodenabschnitts 9 sind beide in oberen Positionen angeordnet.

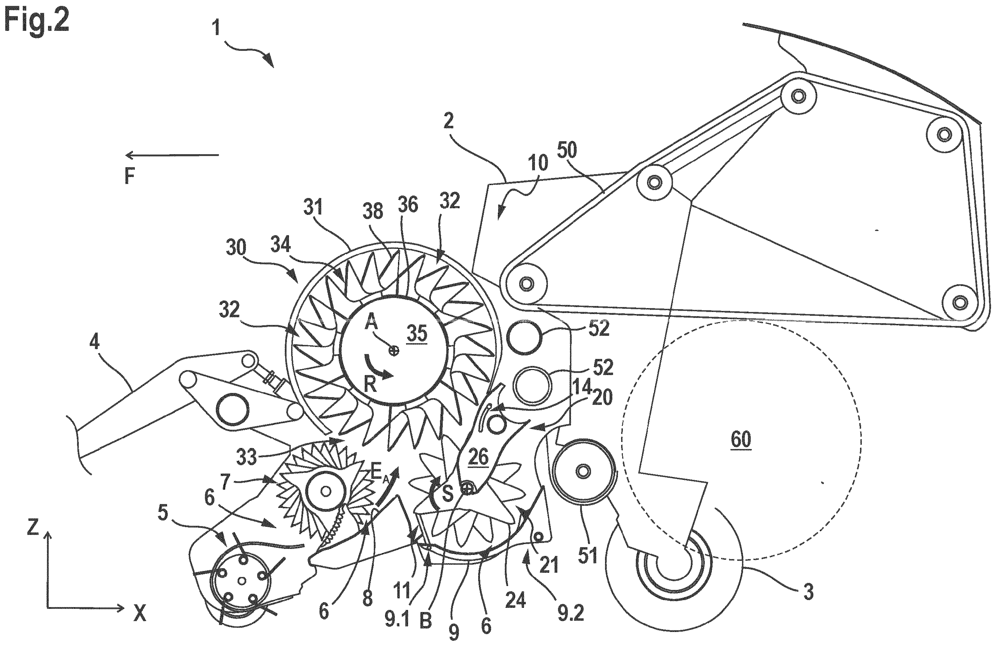

Nach seiner Fertigstellung muss der Erntegutballen 60 über eine hier nicht dargestellte Bindevorrichtung mit Bindematerial versehen und anschließend aus der Presskammer 55 ausgeworfen werden. Während dieses Zeitraums kann kein Erntegut in der Presskammer 55 verarbeitet werden. Daher wechselt die Rundballenpresse 1 in einen Speichermodus, der in Fig. 2 dargestellt ist. Wesentlich hierbei ist, dass der Übergaberotor 21 die Drehrichtung wechselt und nunmehr in einer Speicherzuführrichtung S angetrieben wird, mit Bezug auf Fig. 2 also im Uhrzeigersinn. Der von der Pick-up 5 und dem Schneidrotor 7 kommende Aufnahme-Erntegutstrom E_{A} wird hierdurch nicht mehr in Richtung der Presskammer 55 weitergeleitet, sondern aufwärts durch die Speicheröffnung 33 in den Speicherraum 32. Die genannte Bewegung wird durch die Aufwärtsneigung des Leit-Bodenabschnitts 8 unterstützt. Zu Anfang des Speichermodus ist die Übergabevorrichtung 20 in einer Position, die Fig. 1 entspricht. Hierdurch können die Übergabezinken 24 weit in den Speicherraum 32 eingreifen und so das Erntegut bis in einen Bereich nahe der Fördererwandung 36 transportieren. Im weiteren Verlauf kann der Übergaberotor 21 sukzessive aus dem Speicherraum 32 herausgefahren werden, während der Speicherraum 32 von innen nach außen gefüllt wird. Aufgrund der Verbindung über die ersten Koppelstreben 12 wird der vordere Bereich 9.1 synchron hierzu abwärts verstellt und folgt somit der Bewegung des Übergaberotors 21, wobei er durch die zweite Kulissenführung 14 geführt ist. Normalerweise ist vorgesehen, den Übergaberotor 21 während des gesamten Speichermodus anzutreiben; u.U. könnte er aber auch nur während einer Startphase angetrieben werden, um die Bewegungsumkehr zu initiieren, und danach passiv durch den Aufnahme-Erntegutstrom E_{A} weitergedreht werden. Von maßgeblicher Bedeutung ist in diesem Fall der indirekte Eingriff mit dem angetriebenen Speicherrotor 34 über das mitgeführte Erntegut.

Die Neigung der Speicherzinken 37 auf der Rückseite 38.2 ist dabei so auf die Neigung der Übergabezinken 24 auf der Speicherzuführseite 24.1 abgestimmt, dass die Übergabezinken 24 das Erntegut entlang der Speicherzinken 38 in den Speicherraum hineinschieben können. Die Verstellung der Übergabevorrichtung 20 wird fortgesetzt, bis die Übergabezinken 24 nicht mehr oder nur noch unwesentlich in die Zwischenräume 41 eingreifen, wie in Fig. 2 dargestellt. Der Speicherraum 32 ist so dimensioniert, dass normalerweise Erntegut aufgenommen werden kann, bis der Erntegutballen 60 gebunden wurde und ausgeworfen werden kann, wie in Fig. 2 dargestellt.

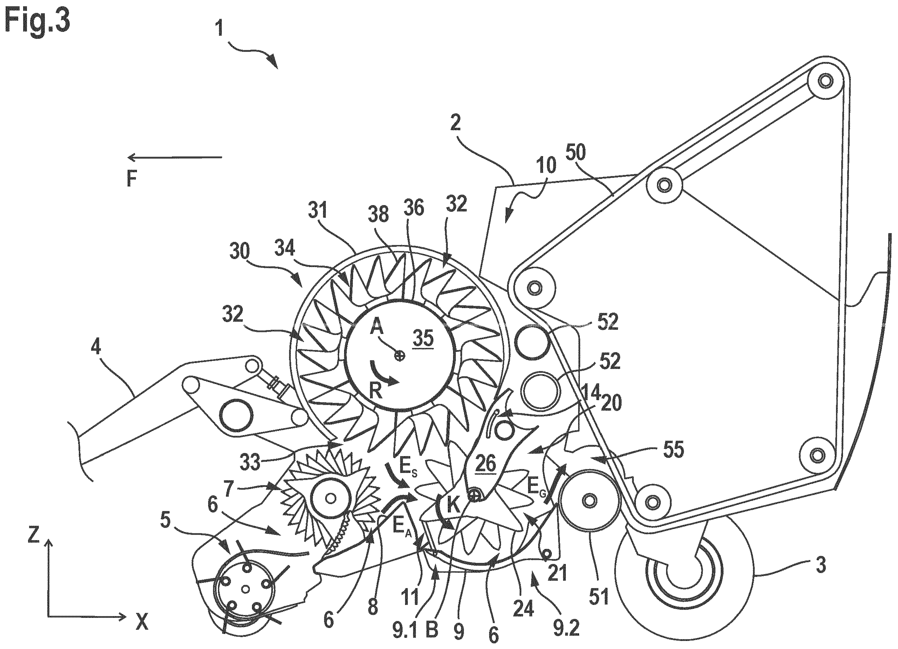

Da die Presskammer 55 nun zur Bildung eines neuen Erntegutballen 60 bereitsteht, wechselt die Rundballenpresse wiederum in den Pressmodus, wozu der Übergaberotor 21 wiederum in Kammerzuführrichtung K angetrieben wird. Fig.3 stellt den Zustand der Rundballenpresse 1 zu Beginn des Pressmodus dar. Dabei greifen die Übergabezinken 21 nur wenig oder gar nicht in den Speicherraum 32 ein. Auf diese Weise wird verhindert, dass der Speicherrotor 21 eine zu große Menge von Erntegut entgegen der Förderbewegung des kontinuierlich weiterlaufenden Speicherrotors 34 herausfördern muss. Erfasst wird zunächst nur eine dünne, bezüglich der Speicherachse A radial äußerste Schicht. Das Erntegut aus dieser Schicht wird durch die Speicheröffnung 33 abwärts in den Zuführkanal 6 und weiter entlang des Rotor-Bodenabschnitts 9 zur Presskammer 55 in gefördert. Dieser aus dem Speicherraum 32 kommende Speicher-Erntegutstrom Es vereinigt sich mit dem Aufnahme-Erntegutstrom E_{A}, der von der Pick-up 5 und dem Schneidrotor 7 kommt, zu einem Gesamt-Erntegutstrom E_{G}. Um den Speicherraum 32 schnell zu leeren und außerdem die kombinierten Erntegutströme effizient zur Presskammer 55 führen zu können, arbeitet der Übergaberotor 21 mit einer höheren Drehzahl als im Speichermodus, z.B. 100 U/min, normalerweise zwischen 80 und 150 U/min. In der Regel sollten die Übergabezinken 24 dabei eine Fördergeschwindigkeit von wenigstens 3 m/s erreichen. Außerdem werden die Starterwalze 51 und somit der hieran gekoppelte hintere Bereich 9.2 des Rotor-Bodenabschnitts 9 abwärts verstellt, um den effektiven Querschnitt des Zuführkanals 6 lokal zu vergrößern. Beim Ausfördern wirken die Vorderseiten 38.1 der Speicherzinken 38 sowie den Speicherzuführseiten 24.1 gegenüberliegende Kammerzuführseiten 24.2 der Übergabezinken 24 gegeneinander auf das zwischengeordnete Erntegut ein. Die Rückwärtsneigung auf der Vorderseite 38.1 ist größer als die auf der Kammerzuführseite 24.2, d.h. diese sind so abgestimmt, dass das Erntegut herausgefördert werden kann, statt in den Speicherraum 32 zurückgedrückt zu werden.

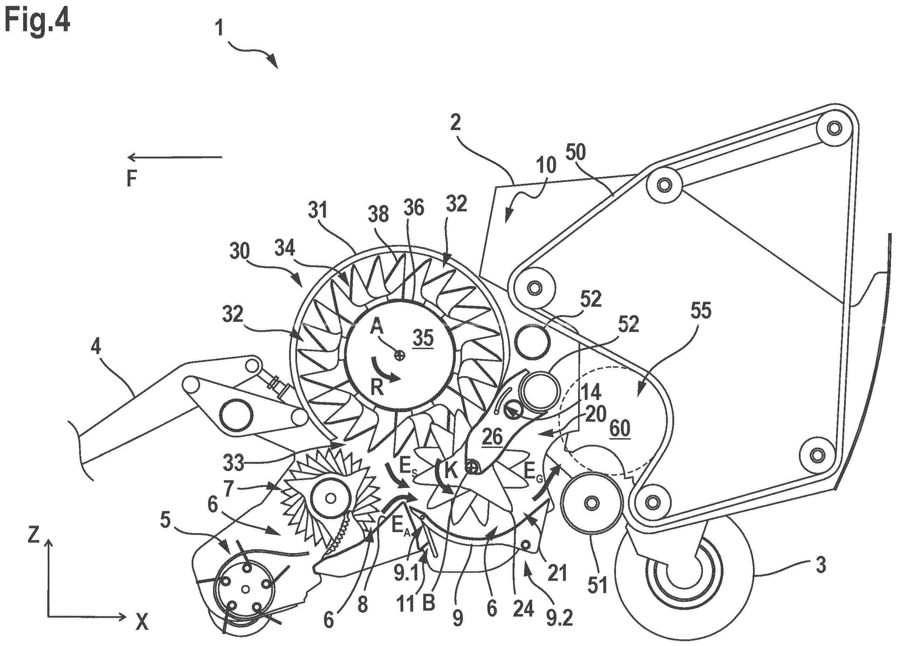

Im Laufe des Pressmodus wird die Übergabevorrichtung 20 wiederum sukzessive verstellt, so dass der Übergaberotor 21 nach und nach weiter in den Speicherraum 32 eingreift und das gespeicherte Erntegut sukzessive von außen nach innen erfasst wird. Fig.4 zeigt dabei einen Zustand, in welchem die Speicherzinken 24 bereits weit in den Speicherraum 32 eingreifen, während in der Presskammer 55 bereits ein Erntegutballen 60 zunehmender Größe geformt wird. Auch hierbei wird der vordere Bereich 9.1 des Rotor-Bodenabschnitts 9 entsprechend der Zwangskopplung synchron verstellt, nämlich aufwärts, so dass sich der Abstand zum Speicherrotor 21 nicht zu stark vergrößert.

Wenn der Speicherrotor 21 maximal in den Speicherraum 32 eingreift, wie in Fig.1 und 4 dargestellt, verschließt der Rotorträger 26 die Speicheröffnung 33 teilweise, wobei er, wie oben beschrieben, eine Verlängerung der Speicherwandung 32 bildet. Genauer gesagt bildet ein Abschnitt seiner Wandung eine Fortführung der Speicherwandung 32, weshalb dieser Abschnitt kreisbogenförmig ausgestaltet ist.

Der Übergaberotor 21 wird im Speichermodus mit einer geringeren Drehzahl in Speicherzuführrichtung S angetrieben, während er im Pressmodus mit einer höheren Drehzahl in Kammerzuführrichtung K angetrieben wird. Die notwendige Richtungsumkehr wird durchgeführt, während die Speicherzinken 24 nicht in den Speicherraum 32 eingreifen. Demgegenüber wird Speicherrotor 34 durchgehend mit konstanter Geschwindigkeit in Speicherförderrichtung R angetrieben, was seine Steuerung sowie die gesamte Steuerung der Rundballenpresse 1 wesentlich vereinfacht.

## Patentansprüche

1. Rundballenpresse (1), aufweisend einen zu einer Presskammer (55) führenden Zuführkanal (6), eine Übergabevorrichtung (20) mit einem Übergaberotor (21), der um eine Übergabeachse (B) in einer Kammerzuführrichtung (K) antreibbar ist, um in einem Pressmodus Erntegut durch den Zuführkanal (6) in Richtung der Presskammer (55) zu fördern, sowie eine Speichervorrichtung (30) mit einem Speicherraum (32) zur zeitweisen Aufnahme von Erntegut, welcher über wenigstens eine Speicheröffnung (33) mit dem Zuführkanal (6) in Verbindung steht, wobei die Speichervorrichtung (30) eine Speicherwandung (31) aufweist, die den Speicherraum (32) nach außen begrenzt, sowie einen antreibbaren Speicherförderer (34), wobei der Übergaberotor (21) dazu eingerichtet ist, im Pressmodus von der Speichervorrichtung (30) abgegebenes Erntegut durch den Zuführkanal (6) in Richtung der Presskammer (55) zu fördern, **dadurch gekennzeichnet, dass**
der Speicherförderer (34) zum umlaufenden Fördern von Erntegut innerhalb des Speicherraums (32) vorgesehen ist, wobei der Übergaberotor (21) zudem dazu eingerichtet ist, in einem Speichermodus unter Drehung in einer der Kammerzuführrichtung (K) entgegengesetzten Speicherzuführrichtung (S) Erntegut aus dem Zuführkanal (6) zur Zwischenspeicherung in Richtung des Speicherraums (32) zu führen.

2. Rundballenpresse (1) nach Anspruch 1, **dadurch gekennzeichnet, dass** diese dazu eingerichtet ist, im Pressmodus wenigstens zeitweise einen von einer Aufnahmevorrichtung (5) kommenden Aufnahme-Erntegutstrom (E_{A}) mit einem von der Speichervorrichtung (30) kommenden Speicher-Erntegutstrom (Es) zu einem Gesamt-Erntegutstrom (E_{G}) zusammenzuführen und diesen der Presskammer (55) zuzuführen.

3. Rundballenpresse (1) nach einem der vorherigen Ansprüche, **dadurch gekennzeichnet, dass** der Speicherförderer (34) um eine Speicherachse (A) rotatorisch antreibbar ist und ein Speicherförderer-Innenteil (35) mit einer den Speicherraum nach innen begrenzende Fördererwandung (36) aufweist sowie von dieser zur Speicherwandung (31) hin abragende Speicherzinken (38), wobei die Speicherwandung (31) wenigstens überwiegend rotationssymmetrisch zur Speicherachse (A) ausgebildet ist.

4. Rundballenpresse (1) nach einem der vorherigen Ansprüche, **dadurch gekennzeichnet, dass** der Übergaberotor (21) eine Mehrzahl von Übergabezinken (24) aufweist, die sich bezüglich der Übergabeachse (B) radial nach außen erstrecken.

5. Rundballenpresse (1) nach einem der vorherigen Ansprüche, **dadurch gekennzeichnet, dass** der Übergaberotor (21) drehbar an einem Rotorträger (26) gelagert ist, der gegenüber einem Rahmen (2) der Rundballenpresse (1) verstellbar ist.

6. Rundballenpresse (1) nach einem der vorherigen Ansprüche, **dadurch gekennzeichnet, dass** der Übergaberotor (21) in Abhängigkeit von der Stellung des Rotorträgers (26) durch eine Speicheröffnung (33) in den Speicherraum (32) eingreift.

7. Rundballenpresse (1) nach einem der vorherigen Ansprüche, **dadurch gekennzeichnet, dass** die Speicherzinken (38) auf einer Förderseite (38.1) eine Rückwärtsneigung aufweisen, so dass die Kante des Speicherzinkens (38) radial nach außen hin tangential zurückweicht, und die Übergabezinken (24) auf einer in Kammerzuführrichtung (K) vorne angeordneten Kammerzuführseite (24.2) eine Rückwärtsneigung aufweisen, welche schwächer ist als die der Speicherzinken (38).

8. Rundballenpresse (1) nach einem der vorherigen Ansprüche, **dadurch gekennzeichnet, dass** die Übergabezinken (24) auf einer in Speicherzuführrichtung (S) vorne angeordneten Speicherzuführseite (24.1) eine Rückwärtsneigung aufweisen, welche stärker ist als eine Neigung, die die Speicherzinken (38) auf einer der Förderseite (38.1) gegenüberliegenden Rückseite (38.2) aufweisen.

9. Rundballenpresse (1) nach einem der vorherigen Ansprüche, **dadurch gekennzeichnet, dass** diese dazu eingerichtet ist, eine am Übergang vom Zuführkanal (6) zur Presskammer (55) angeordnete Starterwalze (51) im Pressmodus aus einer oberen Walzenposition in eine untere Walzenposition zu verstellen und in dieser zumindest zu halten, bis der Speicherraum (32) geleert ist.

10. Rundballenpresse (1) nach einem der vorherigen Ansprüche, **dadurch gekennzeichnet, dass** der Zuführkanal (6) unterhalb des Übergaberotors (21) einen Rotor-Bodenabschnitt (9) aufweist, wobei die Rundballenpresse (1) dazu eingerichtet ist, wenigstens einen bezüglich des Gutstroms vorderen Bereich (9.1) des Rotor-Bodenabschnitts (9) abwärts zu verstellen, wenn der Übergaberotor (21) aus dem Speicherraum (32) herausbewegt wird, und aufwärts zu verstellen, wenn der Übergaberotor (21) in den Speicherraum (32) hineinbewegt wird.

11. Rundballenpresse (1) nach einem der vorherigen Ansprüche, **dadurch gekennzeichnet, dass** die Rundballenpresse (1) dazu eingerichtet ist, wenigstens einen bezüglich des Gutstroms hinteren Bereich (9.2) des Rotor-Bodenabschnitts (9) im Pressmodus zum Entleeren des Speicherraums (32) abwärts zu verstellen und nach dem Entleeren des Speicherraums (32) aufwärts zu verstellen.

12. Rundballenpresse (1) nach einem der vorherigen Ansprüche, **dadurch gekennzeichnet, dass** der Übergaberotor (21) eine Mehrzahl von bezüglich der Übergabeachse (B) zueinander durch erste Zwischenräume (25) axial beabstandeten Übergabezinkenkränzen (23a-23c) aufweist und der Speicherförderer (34) eine Mehrzahl von bezüglich der Speicherachse (A) zueinander durch zweite Zwischenräume (41) axial beabstandeten Speicherzinkenkränzen (37a-37d) aufweist, wobei beim Eingreifen des Übergaberotors (21) in den Speicherraum (32) die Speicherzinkenkränze (37a-37d) in erste Zwischenräume (25) eingreifen und die Übergabezinkenkränze (23a-23c) in zweite Zwischenräume (41) eingreifen.

13. Rundballenpresse (1) nach einem der vorherigen Ansprüche, **dadurch gekennzeichnet, dass** eine Fördergeschwindigkeit des Übergaberotors (21) im Pressmodus wenigstens einer Fördergeschwindigkeit des Speicherförderers (34) entspricht.

14. Rundballenpresse (1) nach einem der vorherigen Ansprüche, **dadurch gekennzeichnet, dass** eine Fördergeschwindigkeit des Übergaberotors (21) im Speichermodus kleiner ist als eine Fördergeschwindigkeit des Speicherförderers (34).

## Claims

1. Round baler (1) comprising a feed channel (6) leading to a pressing chamber (55), a transfer device (20) having a transfer rotor (21) which is drivable about a transfer axis (B) in a chamber feed direction (K) in order to convey harvested material through the feed channel (6) toward the pressing chamber (55) in a pressing mode, a storage device (30) having a storage space (32) for temporarily receiving harvested material, which storage space is connected to the feed channel (6) via at least one storage opening (33), the storage device (30) having a storage wall (31) which limits the storage space (32) to the outside, and a drivable storage conveyor (34), the transfer rotor (21) being designed, in the pressing mode, to convey harvested material discharged from the storage device (30) through the feed channel (6) toward the pressing chamber (55),
**characterized in that**
the storage conveyor (34) is designed for rotationally conveying harvested material within the storage space (32), the transfer rotor (21) also being designed, in a storage mode, to guide harvested material from the feed channel (6) toward the storage space (32) for intermediate storage by rotating in a storage feed direction (S) counter to the chamber feed direction (K).

2. Round baler (1) according to claim 1, **characterized in that** said baler is designed, in the pressing mode, to combine, at least temporarily, a receiving harvested material flow (EA) coming from a receiving device (5) with a storage harvested material flow (Es) coming from the storage device (30) to form a total harvested material flow (EG) and to feed this to the pressing chamber (55).

3. Round baler (1) according to either of the preceding claims, **characterized in that** the storage conveyor (34) is rotatably driven about a storage axis (A) and has a storage conveyor inner part (35) having a conveyor wall (36), which limits the storage space inwardly, and storage tines (38) projecting from this conveyor wall to the storage wall (31), the storage wall (31) being at least predominantly rotationally symmetrical to the storage axis (A).

4. Round baler (1) according to any of the preceding claims,
**characterized in that** the transfer rotor (21) has a plurality of transfer tines (24) which extend radially outward with respect to the transfer axis (B).

5. Round baler (1) according to any of the preceding claims,
**characterized in that** the transfer rotor (21) is rotatably mounted on a rotor carrier (26) which is adjustable relative to a frame (2) of the round baler (1).

6. Round baler (1) according to any of the preceding claims,
**characterized in that** the transfer rotor (21) engages in the storage space (32) through a storage opening (33) depending on the position of the rotor carrier (26).

7. Round baler (1) according to any of the preceding claims,
**characterized in that** the storage tines (38), on a conveying side (38.1), have a backward inclination such that the edge of the storage tine (38) recedes radially outward tangentially, and the transfer tines (24), on a chamber feed side (24.2) arranged at the front in the chamber feed direction (K), have a backward inclination which is less than that of the storage tines (38).

8. Round baler (1) according to any of the preceding claims,
**characterized in that** the transfer tines (24), on a storage feed side (24.1) arranged at the front in the storage feed direction (S), have a backward inclination which is greater than an inclination which the storage tines (38) have on a rear side (38.2) opposite the conveying side (38.1).

9. Round baler (1) according to any of the preceding claims,
**characterized in that** said baler is designed, in the pressing mode, to adjust a starter roller (51) located at the transition from the feed channel (6) to the pressing chamber (55) from an upper roller position to a lower roller position and to hold it in this position at least until the storage space (32) is emptied.

10. Round baler (1) according to any of the preceding claims,
**characterized in that** the feed channel (6) has a rotor base portion (9) below the transfer rotor (21), the round baler (1) being designed to adjust at least one front region (9.1) of the rotor base portion (9), with respect to the material flow, downward when the transfer rotor (21) is moved out of the storage space (32), and upward when the transfer rotor (21) is moved into the storage space (32).

11. Round baler (1) according to any of the preceding claims,
**characterized in that** the round baler (1) is designed, in the pressing mode, to adjust at least one rear region (9.2) of the rotor base portion (9), with respect to the material flow, downward in order to empty the storage space (32) and upward after emptying the storage space (32).

12. Round baler (1) according to any of the preceding claims,
**characterized in that** the transfer rotor (21) has a plurality of transfer tine rings (23a-23c) axially spaced apart from one other with respect to the transfer axis (B) by first spaces (25), and the storage conveyor (34) has a plurality of storage tine rings (37a-37d) axially spaced apart from one other with respect to the storage axis (A) by second spaces (41), the storage tine rings (37a-37d) engaging in first intermediate spaces (25) and the transfer tine rings (23a-23c) engaging in second intermediate spaces (41) when the transfer rotor (21) engages in the storage space (32).

13. Round baler (1) according to any of the preceding claims,
**characterized in that** a conveying speed of the transfer rotor (21) in the pressing mode corresponds at least to a conveying speed of the storage conveyor (34).

14. Round baler (1) according to any of the preceding claims,
**characterized in that** a conveying speed of the transfer rotor (21) in the storage mode is less than a conveying speed of the storage conveyor (34).

## Revendications

1. Presse à balles rondes (1), présentant un canal d'acheminement (6) menant à une chambre de pressage (55), un dispositif de transfert (20) comportant un rotor de transfert (21) qui peut être entraîné autour d'un axe de transfert (B) dans un sens d'acheminement de chambre (K) afin de transporter la récolte à travers le canal d'acheminement (6) en direction de la chambre de pressage (55) dans un mode de pressage, ainsi qu'un dispositif de stockage (30) comportant un espace de stockage (32) pour la réception temporaire de la récolte, lequel dispositif de stockage est relié au canal d'acheminement (6) par l'intermédiaire d'au moins une ouverture de stockage (33), dans laquelle le dispositif de stockage (30) présente une paroi de stockage (31) qui limite l'espace de stockage (32) vers l'extérieur, ainsi qu'un transporteur de stockage (34) pouvant être entraîné, dans laquelle le rotor de transfert (21) est conçu pour transporter la récolte déchargée du dispositif de stockage (30) à travers le canal d'acheminement (6) en direction de la chambre de pressage (55) dans le mode de pressage,
**caractérisée en ce que**
le transporteur de stockage (34) est prévu pour le transport continu de la récolte dans l'espace de stockage (32), dans laquelle le rotor de transfert (21) est en outre conçu pour mener la récolte depuis le canal d'acheminement (6) en direction de l'espace de stockage (32) pour un stockage intermédiaire dans un mode de stockage tout en tournant dans un sens d'acheminement de stockage (S) opposé au sens d'acheminement de chambre (K).

2. Presse à balles rondes (1) selon la revendication 1, **caractérisée en ce que** celle-ci est conçue pour acheminer, au moins temporairement dans le mode de pressage, un flux de récolte de réception (E_{A}) provenant d'un dispositif de réception (5) conjointement avec un flux de récolte de stockage (E_{S}) provenant du dispositif de stockage (30) afin de former un flux de récolte total (E_{G}) et pour acheminer celui-ci vers la chambre de pressage (55).

3. Presse à balles rondes (1) selon l'une des revendications précédentes, **caractérisée en ce que** le transporteur de stockage (34) peut être entraîné en rotation autour d'un axe de stockage (A) et présente une partie intérieure de transporteur de stockage (35) comportant une paroi de transporteur (36) limitant l'espace de stockage vers l'intérieur ainsi que des dents de stockage (38) qui font saillie depuis ladite paroi de transporteur jusqu'à la paroi de stockage (31), dans laquelle la paroi de stockage (31) est réalisée de manière à être au moins majoritairement symétrique par rapport à l'axe de stockage (A).

4. Presse à balles rondes (1) selon l'une des revendications précédentes, **caractérisée en ce que** le rotor de transfert (21) présente une pluralité de dents de transfert (24) qui s'étendent radialement vers l'extérieur par rapport à l'axe de transfert (B).

5. Presse à balles rondes (1) selon l'une des revendications précédentes, **caractérisée en ce que** le rotor de transfert (21) est monté de manière à pouvoir tourner sur un support pour rotor (26) qui est réglable par rapport à un châssis (2) de la presse à balles rondes (1).

6. Presse à balles rondes (1) selon l'une des revendications précédentes, **caractérisée en ce que** le rotor de transfert (21) vient en prise dans l'espace de stockage (32) par une ouverture de stockage (33) en fonction de la position du support pour rotor (26).

7. Presse à balles rondes (1) selon l'une des revendications précédentes, **caractérisée en ce que** les dents de stockage (38) sur un côté de transport (38.1) présentent une inclinaison vers l'arrière, de sorte que le bord de la dent de stockage (38) recule radialement vers l'extérieur tangentiellement, et les dents de transfert (24) sur un côté d'acheminement de chambre (24.2) disposé à l'avant dans le sens d'acheminement de chambre (K) présentent une inclinaison vers l'arrière inférieure à celle des dents de stockage (38).

8. Presse à balles rondes (1) selon l'une des revendications précédentes, **caractérisée en ce que** les dents de transfert (24) sur un côté d'acheminement de stockage (24.1) disposé à l'avant dans le sens d'acheminement de stockage (S) présentent une inclinaison vers l'arrière supérieure à une inclinaison que les dents de stockage (38) présentent sur un côté arrière (38.2) opposé au côté de transport (38.1).

9. Presse à balles rondes (1) selon l'une des revendications précédentes, **caractérisée en ce que** celle-ci est conçue pour régler un rouleau de démarrage (51) disposé au niveau de la transition du canal d'acheminement (6) à la chambre de pressage (55) d'une position de rouleau supérieure à une position de rouleau inférieure dans le mode de pressage, et pour le maintenir dans ladite position au moins jusqu'à ce que l'espace de stockage (32) soit vidé.

10. Presse à balles rondes (1) selon l'une des revendications précédentes, **caractérisée en ce que** le canal d'acheminement (6) en dessous du rotor de transfert (21) présente une section inférieure de rotor (9), dans laquelle la presse à balles rondes (1) est conçue pour régler vers le bas au moins une zone (9.1) de la section inférieure de rotor (9) qui est en avant par rapport au flux de matière lorsque le rotor de transfert (21) est déplacé hors de l'espace de stockage (32), et pour la régler vers le haut lorsque le rotor de transfert (21) est déplacé dans l'espace de stockage (32).

11. Presse à balles rondes (1) selon l'une des revendications précédentes, **caractérisée en ce que** la presse à balles rondes (1) est conçue pour ajuster vers le bas au moins une zone (9.2) de la section inférieure de rotor (9) qui est en arrière par rapport au flux de matière dans le mode de pressage pour vider l'espace de stockage (32), et pour la régler vers le haut après avoir vidé l'espace de stockage (32).

12. Presse à balles rondes (1) selon l'une des revendications précédentes, **caractérisée en ce que** le rotor de transfert (21) présente une pluralité de couronnes de dents de transfert (23a-23c) espacées axialement les unes des autres par rapport à l'axe de transfert (B) par des premiers espaces intermédiaires (25) et le transporteur de stockage (34) présente une pluralité de couronnes de dents de stockage (37a-37d) espacées axialement les unes des autres par rapport à l'axe de stockage (A) par des seconds espaces intermédiaires (41), dans laquelle, lorsque le rotor de transfert (21) vient en prise dans l'espace de stockage (32), les couronnes de dents de stockage (37a-37d) viennent en prise dans les premiers espaces intermédiaires (25) et les couronnes de dents de transfert (23a-23c) viennent en prise dans les seconds espaces intermédiaires (41).

13. Presse à balles rondes (1) selon l'une des revendications précédentes, **caractérisée en ce qu'**une vitesse de transport du rotor de transfert (21) dans le mode de pressage correspond au moins à une vitesse de transport du transporteur de stockage (34).

14. Presse à balles rondes (1) selon l'une des revendications précédentes, **caractérisée en ce qu'**une vitesse de transport du rotor de transfert (21) dans le mode de stockage est inférieure à la vitesse de transport du transporteur de stockage (34).
